# EUROPEAN PATENT APPLICATION

(11) **EP 3 462 390 A1**
(43) Date of publication of application: **03.04.2019**
(21) Application number: 18197322.3
(22) Date of filing: 27.09.2018
(51) Int. Cl.: G06Q 10/06

(54) **SYSTEMS FOR AUTOMATED PROFILE BUILDING, SKILLSET IDENTIFICATION, AND SERVICE TICKET ROUTING**

(30) Priority: 02.10.2017 US 201715722733
(71) Applicant: Servicenow, Inc., Santa Clara, California 95054 (US)
(72) Inventor: GUPTA, Sanjay, Santa Clara, CA California 95054 (US); BELLAMANE, Harish Kumar Balachandra, Santa Clara, CA California 95054 (US); AMBATI, Sarath, Santa Clara, CA California 95054 (US); PAUL, Sarup, Santa Clara, CA California 95054 (US); WHEELER, Cameron, Santa Clara, CA California 95054 (US)
(74) Representative: Boult Wade Tennant LLP

(57) **Abstract**

A system includes a non-transitory memory and one or more hardware processors configured to read instructions from the non-transitory memory to perform operations. The operations include maintaining a list of agent profiles, wherein each of the agent profiles comprises a plurality of skills toward which points are awarded based on completed activities, receiving a service request, identifying one or more skills associated with the service request, referencing the list of agent profiles to identify one of the agent profiles possessing the one or more skills associated with the service request, and assigning the service request to the agent profile possessing the one or more skills associated with the service request.

## Description

### BACKGROUND

This section is intended to introduce the reader to various aspects of art that may be related to aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Individuals, enterprises, and other organizations may utilize software resources, via multiple devices connected to a network, to conduct activities or otherwise run an organization. Set up, expansion, maintenance, and normal use of such systems may give rise to issues that a user may not have the expertise to resolve on his or her own. In such cases, a customer service agent may be utilized to quickly and efficiently resolve the issue. Manually reviewing a service request from a customer, identifying the best equipped customer service agent, and assigning the service request to the appropriate customer service agent may substantially increase the time elapsed between when the service request is opened and when the service request is closed, upon resolution of the issue.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

The disclosed techniques generally relate to building user profiles to identify skills or areas of expertise possessed by the users, identifying skills associated with tasks, and assigning tasks to the users possessing the associated skills. Specifically, each user of a platform may have an associated profile. As activities of the various users occur

(e.g., posting content, interacting with content, answering questions, responding to service requests, resolving issues, etc.), the activities are associated with skills. Users are then awarded points that correspond to the respective skills. In some embodiments, badges or levels (i.e., some form of quantitative or qualitative indicator of expertise) associated with a given skill may be earned by accruing points. A user's level(s), badges, or points totals in each skill category (e.g., bucket) may be indicative of, and thus communicate to other users, the skills possessed by the user and/or their areas of expertise. For customer service, service requests may be processed and analyzed using a machine learning algorithm configured to determine what skills are associated with a submitted service request and assign the service request to a service agent possessing the associated skill(s). Feedback regarding whether or not the service request was properly assigned may be used to update a training data set used to update or refine the machine learning algorithm, such as to refine operation of an artificial neural network. As the training data set is updated, the algorithm is retrained, improving the ability of the machine learning algorithm to process service requests and assignment to agents.

### BRIEF DESCRIPTION OF THE DRAWINGS

The description herein makes reference to the accompanying drawings, wherein like reference numerals refer to like parts throughout the several views.
FIG. 1 is a block diagram of a distributed computing system utilizing a platform and a database (DB), in accordance with an embodiment;
FIG. 2 is a block diagram of a computing device utilized in the distributed computing system of FIG. 1, in accordance with an embodiment;
FIG. 3 is a schematic of an embodiment of a customer service architecture implemented by the distributed computing system of FIG. 1, in accordance with an embodiment;
FIG. 4 is an embodiment of a profile page for the customer service architecture of FIG. 3, in accordance with an embodiment;
FIG. 5 is an embodiment of a screen visible to an administrator that includes a table of rules for point allocation, in accordance with an embodiment;
FIG. 6 is an embodiment of a new rule window for adding a new rule to the table of rules of FIG. 5, in accordance with an embodiment;
FIG. 7 is a table architecture for keeping track of awarded points, in accordance with an embodiment;
FIG. 8 is a table architecture for keeping track of a user's level, in accordance with an embodiment;
FIG. 9 is a table architecture for keeping track of the user's badges, in accordance with an embodiment;
FIG. 10 is a flow chart of a process for allocating points to profiles based on activities, in accordance with an embodiment;
FIG. 11 is a flow chart of a process for training a machine learning algorithm to assign service requests and using the machine learning algorithm to process service requests, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Information Technology (IT) is increasingly important in an electronics-driven world in which enterprises and other organizations utilize computers to conduct operations and help run their organizations. However, hardware and software resources used by organizations may take a significant time investment for users to set up, learn to operate, and trouble shoot. This results in reduced efficiency for software resource customers as users tend to the software resource instead of performing their usual tasks. Accordingly, software resource providers may provide users with a customer service architecture that may include self-help (e.g., posted how-to guides, set up guides, troubleshooting guides, etc.), peer-to-peer or crowdsourced assistance (e.g., forums or message boards), and a team of customer service agents that can assist customers onsite or from a remote location. Receiving service requests, processing the service requests, and assigning the service requests to appropriate customer service agents that possess the skills to resolve the service request uses a significant amount of resources. By using algorithms and machine learning to build service agent profiles to identify their skillsets, process service requests to identify associated skills, and assign the service requests to agents possessing the associated skills, receiving, processing, and assigning service requests can be done faster and more efficiently. Thus, by employing the disclosed techniques, more service requests may be assigned to an appropriate service agent in a timely manner (e.g., on the first attempt), and the time from service request submission to closure may be reduced.

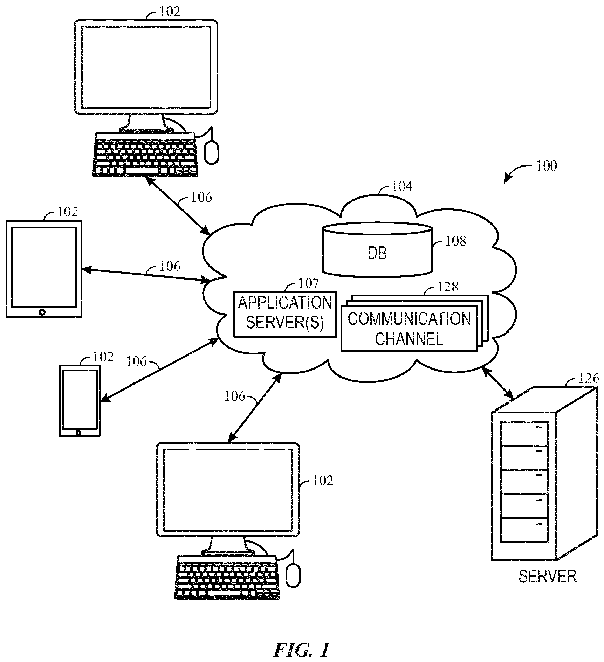

With the preceding in mind, FIG. 1 is a block diagram of a system 100 that utilizes distributed computing and that may be used in conjunction with the approaches discussed herein for providing customer service. As illustrated, one or more clients 102 communicate with a platform (e.g., a cloud service) 104 over a communication channel 106. Each client 102 may include any suitable computing system, such as a mobile phone, a tablet computer, a laptop computer, a notebook computer, a desktop computer, or any other suitable computing device or combination of computing devices. Each client 102 may include client application programs running on the computing devices.

The platform (e.g., a cloud service) 104 may include any suitable number of computing devices (e.g., computers) in one or more locations that are connected together using one or more networks. For instance, the platform 104 may include various computers acting as servers in datacenters at one or more geographic locations where the computers are connected together using network and/or Internet connections. The communication channel 106 may include any suitable communication mechanism for electronic communication between each client 102 and the platform 104. The communication channel 106 may incorporate local area networks (LANs), wide area networks (WANs), virtual private networks (VPNs), cellular networks (e.g., long term evolution networks), and/or other network types for transferring data between the client 102 and the platform 104. For example, the communication channel 106 may include an Internet connection when the client 102 is not on a local network common with the platform 104. Additionally or alternatively, the communication channel 106 may include network connection sections when the client and the platform 104 are on different networks or entirely using network connections when the client 102 and the platform 104 share a common network. Although only four clients 102 are shown connected to the platform 104 in the depicted example, it should be noted that platform 104 may connect to any number of clients (e.g., tens, hundreds, or thousands of clients).

Through the platform 104, the client 102 may connect to various devices with various functionality, such as gateways, routers, load balancers, databases, application servers running application programs on one or more nodes, or other devices that may be accessed via the platform 104. For example, the client 102 may connect to an application server 107 and/or a database (DB) 108 via the platform 104. The application server 107 may include any computing system, such as a desktop computer, laptop computer, server computer, and/or any other computing device capable of providing functionality from an application program to the client 102. The application server 107 may include one or more application nodes running application programs whose functionality is provided to the client via the platform 104.

The DB 108 includes a series of tables containing information about assets and services controlled by a client 102 and the configurations of these assets and services. The assets and services may include records of computers, other devices on a network (or group of networks), software contracts and/or licenses, enterprise services; hardware resources, such as server computing devices, client computing devices, processors, memory, storage devices, networking devices, or power supplies; software resources, such as instructions executable by the hardware resources including application software or firmware; virtual resources, such as virtual machines or virtual storage devices; and/or storage constructs such as data files, data directories, or storage models.

Additional to or in place of the DB 108, the platform 104 may include one or more other database servers. The database servers are configured to store, manage, or otherwise provide data for delivering services to the client 102 over the communication channel 106. The database server includes one or more databases (e.g., DB 108) that are accessible by the application server 107, the client 102, and/or other devices external to the databases. In some embodiments, more than a single database server may be utilized. Furthermore, in some embodiments, the platform 104 may have access to one or more databases external to the platform 104 entirely.

Access to the platform 104 is enabled by a server 126 via a communication channel 128. The server 126 may include an application program (e.g., Java application) that runs as a service (e.g.., Windows service or UNIX daemon) that facilitates communication and movement of data between the platform 104 and external applications, data sources, and/or services. The server 126 may be implemented using a computing device (e.g., server or computer) on the network 112 that communicates with the platform 104.

The application servers 107 may store content accessible by one or more users via one of the clients. For example, the application server 107 may store one or more pages (e.g., Community pages, knowledge management pages, customer service management pages, and so forth, as discussed herein) with which one or more of the users may interact (e.g., view, post, etc.) with other users and/or customer service agents. As a result, users may use the pages to resolve issues that arise through installation, expansion, maintenance, and regular use of the network, either on their own, or with the help of a customer service agent.

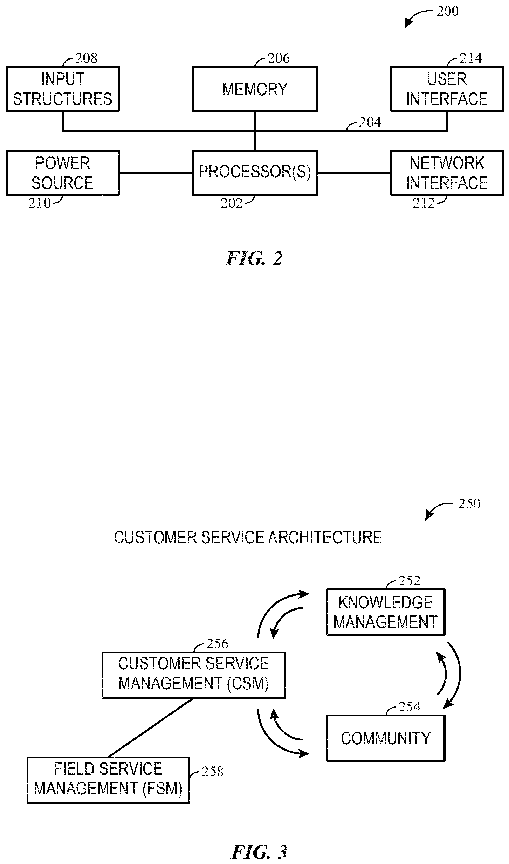

FIG. 2 generally illustrates a block diagram of an embodiment of an internal configuration of a computing device 200. With respect to FIGS. 1 and 2, the computing device 200 may be an embodiment of the client 102, the application server 107, a database server (e.g., DB 108), other servers in the platform 104 (e.g., server hosting the communication channel 128), and/or a device running the server 126. These devices may include a computing system that includes multiple computing devices and/or a single computing device, such as a mobile phone, a tablet computer, a laptop computer, a notebook computer, a desktop computer, a server computer, and/or other suitable computing devices.

As illustrated, the computing device 200 may include various hardware components. For example, the device includes one or more processors 202, one or more busses 204, memory 206, input structures 208, a power source 210, a network interface 212, a user interface 214, and/or other computer components useful in performing the functions described herein.

The one or more processors 202 may include a processor capable of performing instructions stored in the memory 206. For example, the one or more processors may include microprocessors, system on a chips (SoCs), or any other circuitry capable of performing functions by executing instructions, such as instructions stored in the memory 206. Additionally or alternatively, the one or more processors 202 may include application-specific integrated circuits (ASICs), field-programmable gate arrays (FPGAs), and/or other devices that may perform the functions discussed herein without calling instructions from the memory 206. Moreover, the functions of the one or more processors 202 may be distributed across multiple processors in a single physical device or in multiple processors in more than one physical device. The one or more processors 202 may also include specialized processors, such as a graphics processing unit (GPU).

The one or more busses 204 includes suitable electrical channels to provide data and/or power between the various components of the computing device. For example, the one or more busses 204 may include a power bus from the power source 210 to the various components of the computing device. Additionally, in some embodiments, the one or more busses 204 may include a dedicated bus among the one or more processors 202 and/or the memory 206.

The memory 206 may include any tangible, non-transitory, and computer-readable storage media. For example, the memory 206 may include volatile memory, non-volatile memory, or any combination thereof. For instance, the memory 206 may include read-only memory (ROM), randomly accessible memory (RAM), disk drives, solid state drives, external flash memory, or any combination thereof. Although shown as a single block in FIG. 2, the memory 206 can be implemented using multiple physical units in one or more physical locations. The one or more processor 202 accesses data in the memory 206 via the one or more busses 204.

The input structures 208 provide structures to input data and/or commands to the one or more processor 202. For example, the input structures 208 include a positional input device, such as a mouse, touchpad, touchscreen, and/or the like. The input structures 208 may also include a manual input, such as a keyboard and the like. These input structures 208 may be used to input data and/or commands to the one or more processors 202 via the one or more busses 204. The input structures 208 may also monitor operating conditions (e.g., temperatures) of various components of the computing device 200, such as the one or more processors 202.

The power source 210 can be any suitable source for power of the various components of the computing device 200. For example, the power source 210 may include line power and/or a battery source to provide power to the various components of the computing device 200 via the one or more busses 204.

The network interface 212 is also coupled to the processor 202 via the one or more busses 204. The network interface 212 includes one or more transceivers capable of communicating with other devices over one or more networks (e.g., the communication channel 106). The network interface may provide a wired and/or wireless network interface. Moreover, the computing device 200 may communicate with other devices via the network interface 212 using one or more network protocol.

A user interface 214 may include a display that is configured to display images transferred to it from the one or more processors 202. In addition to and/or alternative to the display, the user interface 214 may include other devices for interfacing with a user. For example, the user interface 214 may include lights (e.g., LEDs), speakers, haptic feedback, and the like.

As discussed herein, a user may use a computing device 200 to access various components of a customer service architecture in order to resolve issues, either on their own, with the assistance of other users, or with the assistance of a customer service agent. FIG. 3 is a schematic of a generalized customer service architecture 250. In the illustrated example, the customer service architecture 250 includes Knowledge Management 252, Community 254, Customer Service Management (CSM) 256, and Field Service Management (FSM) 258. However, it should be understood that a customer service architecture 250 vary from what is shown, and other example architectures may include additional components that are not shown, fewer components, of different combinations of components.

The Knowledge Management component 252 includes navigable pages with information designed to help users resolve issues on their own. For example, the Knowledge Management component 252 may include blog posts, essays, photo essays, how-to guides, troubleshooting guides, and the like, organized by topic. For example, a user may be having trouble connecting a specific model of router to a network after updating the router's firmware. The user may search the Knowledge Management component 252 or navigate a series of nested menus to find a page that helps the user resolve the issue (e.g., "trouble shooting guide following firmware update for router X", or "resolving connectivity issues for model X"). For some common issues, the Knowledge Management component 252 may be the most efficient way to resolve some issues that arise. For example, for issues that arise frequently and are easy to resolve, rather than utilizing the bandwidth of a customer service agent to help customers resolve the issue over and over again across multiple networks, it may be better to have a page on the Knowledge Management component 252 that walks users through resolving the problem on their own. Of course, customer service agents may be available to help users who are unable to resolve the issue on their own, or are uncomfortable trying to resolve the issue on their own. Further, because the Knowledge Management component 252 is immediately accessible to users 24 hours a day, a user may be able to resolve the issue quickly without having to wait on a customer service agent or another user to assist them.

In some instances, a user may not be able to resolve the issue on their own using the Knowledge Management component 252. For example, the Knowledge Management component 252 may not yet have a page directed to the issue, or the existing page may not yet include the specific action to resolve the specific instance of the issue (e.g., which may be unique to the user based on the specific circumstances, combination of hardware/software, etc.). In such circumstances, the Community component 254 may be helpful in resolving the issue.

The Community component 254 includes a collection of pages that users may post, read, or otherwise interact with. For example, the Community component 254 may include forums and/or message boards, questions and answers, blogs, videos, photos, links, text, etc. through which users may interact with one another. Though the Community component 254 may cover a wide range of topics and subject matter, one aspect of the Community component 254 is crowdsourcing of issue resolution. For example, a user facing an issue, such as the router conductivity after firmware update example discussed above, may post an object on the Community component 254 soliciting assistance from other users in resolving the issue. Specifically, the user may be unable to resolve the issue using the Knowledge Management component 252, either because there was not yet a page directed to the issue, the user was unable to find the page, or there was a page directed to the issue, but the specific circumstances of the user made the suggested remedial actions inapplicable to the user's specific issue. The user, not wanting to trouble a customer service agent, may then move to the Community component to find a resolution. As with the Knowledge Management component 252, the user may be able to search or navigate nested menus to find posts related to his or her specific issue. If the user is unable to find a related post, the user may create their own post (e.g., ask a question, write a blog, post a photo, post a video, or other text strings or media) soliciting assistance from other users. The post may be visible to other users when they log on to the Community component 254. The other users may then reply to the post, comment on the post, post a link (e.g., to a Knowledge component 252 page), or send the original posting user a message suggesting how to resolve the issue. The helping users may then acquire points toward their profiles as a way to encourage participation. In some cases, posts and/or exchanges on the Community component 254 successfully resolving an issue may be turned into pages on the Knowledge Management component 252 or used to revise pages on the Knowledge Management component 252.

Another available resource for a user to resolve issues is the CSM component 256. If the user is unable to resolve the issue using the Knowledge Management component 252 or the Community component 254, or the user would rather have the assistance of a customer service agent, the user may utilize the CSM component 256 to request the help of a customer service agent to resolve the issue. For example, the user may utilize the CSM component 256 to generate a service request, or "ticket". The user may provide various information about the issue and then submit the request. As is described in more detail below, the ticket is reviewed and assigned to a customer service agent. The assigned customer service agent then interacts with the user (e.g., via phone, voice over internet protocol (VOIP), voice or video conferencing, remote desktop, a chat window, etc.) to resolve the issue remotely. In some cases, the customer service agent may not be able to resolve the issue remotely. The customer service agent may then refer the user to the FSM component 258, by which the service ticket may be assigned to a field service agent who can come to diagnose and resolve the issue on-site. When the issue has been resolved, the ticket is closed.

As discussed herein, profiles may be built for customer service agents based on the activities (e.g., resolving service requests) he or she performs. As activities are performed (which may be indicated by the closure of a service ticket), skills associated with each activity are identified and the agent is awarded points toward those skills. For example, a service request may be analyzed to determine the skills used to resolve the issue, or otherwise related to the issue (e.g., network connectivity, security, programming, network architecture, etc.) and the difficulty of the issue and points awarded based on these factors. Over time, the agent's profile (e.g., point totals across a range of skills) comes to represent the skillset or skill profile of the agent. When service requests are received, they may be processed or otherwise evaluated to identify the likely skills used to resolve the request. Accordingly, the profiles of available agents may be compared to the skills associated with the pending service request to identify the best agent to handle the service request.

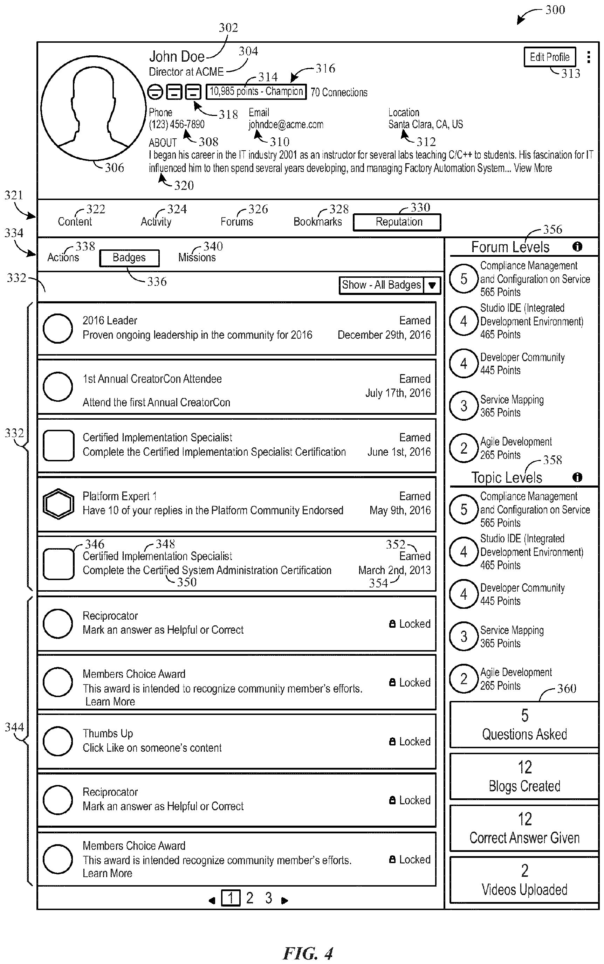

All of the users with access to the various components 252, 254, 256, 258 of the customer service architecture 250 (e.g., users, customer service agents, field service agents, network administrators, service managers, etc.) may have an associated profile. FIG. 4 shows one embodiment of a profile page 300. As shown, the depicted profile page 300 includes the user's name 302, organization 304, profile picture 306, contact information (e.g., phone number 308, email address 310, etc.), and location. Of course, the listed information may be edited by the user (e.g., by selecting the edit profile tab button 313). Further, the user may elect to make certain fields (e.g., phone number 308, email address 310, etc.) only visible to connected profiles (i.e., not public), or to not make those field visible at all. The profile page 300 also lists the user's point total 314, profile level 316, and badges. As previously discussed, certain activities (e.g., closing out a ticket, completing a course or training activity, achieving a certification or license, and so forth) may trigger points to be awarded to the user's profile. Specifically, the points may be awarded to the user's skillset point tally for the skills associated with the completed activity. However, the point total 314 on the user's profile page may be indicative of the total number of points accumulated by the user, across all skillsets or a subset of skillsets. As the user accumulates points, either aggregate points or points for one or more skills, the user may achieve different profile levels, indicative of a user's general proficiency. As shown, as the user accumulates points toward a specific skill or subset of skills, the user may obtain badges indicative of proficiency or expertise in a particular area. In some embodiments, points may expire after a period of time, or decrease in value over time to reflect the user's current expertise. For example, if an information technology professional works in a first area of information technology for ten years and then switches to a second area of information technology, their expertise in the first area will likely degrade as time progresses if they fail to stay current. The biography provides basic information about the user and is typically provided by the user.

A first row of tabs 321 includes a content tab 322, an activity tab 324, a forums tab 326, a bookmarks tab 328, and a reputation tab 330. The first row of tabs 321 control what is displayed in a window 332 below the tabs. Selecting the content tab 322 causes the window 332 to display (e.g., in chronological order, order of importance/relevance, etc.) content posted by the user. The content may include, for example, blogs, links, videos, pictures, questions, answers, etc. posted by the user. Selecting the activity tab 324 causes the window 332 to display activities of the user, which may include, for example, liking, commenting, or responding to content posted by another user, or other users liking, commenting, or responding to content posted by the user. Selecting the forums tab 326 causes the window 332 to display forums in which the user is an active participant. Selecting the reputation tab 330 causes the window 332 to display information regarding the user's points and badges.

As shown, selection of some of the tabs in the first row 321 of tabs may trigger a second row of tabs 334 to display, which includes sub-tabs of the selected tab. For example, in the illustrated embodiment, the reputation tab 330 is selected and a badges sub-tab 336 is selected (the second row 334 also includes an actions sub-tab 338 and a missions sub-tab 340). Accordingly, the window 332 lists the badges 342 earned by the user. Below the earned badges 342, the available (but not yet earned) badges 344 are listed. Each badge listing includes an icon or avatar 346, a title or badge name 348, a description 350, a status (e.g., earned, locked, unavailable, etc.), and a date earned 354, if it had been earned.

Along the right side of the profile page 300 are a forum level window 356, a topic level window 358, and an activity snapshot window 360. The forum level window 356 displays the level of the user in the various forums in which they participate, such as on a scale of 1 to 5, wherein 1 is the least accomplished, and 5 is the most accomplished. The forum level window 356 may be configured to display the forums in descending order based on the user's forum level. Further, the forum level window 356 may be configured to only display a set number (e.g., 5) of forum levels. Similarly, the topic level window 358 displays the level of the user in various subject matter topic, such as on a scale of 1 to 5, wherein 1 is the least accomplished, and 5 is the most accomplished. The topic level window 358 may be configured to display the forums in descending order based on the user's topic level. Further, the topic level window 358 may be configured to only display a set number (e.g., 5) of topic levels. The activity snapshot window 360 provides a snapshot into the user's recent activity. For example, in the illustrated embodiment, the activity snapshot window 360 includes the number of questions asked, the number of blogs created, the number of questions answered correctly, and the number of videos uploaded. Of course, in other embodiments, other types of activities may be displayed.

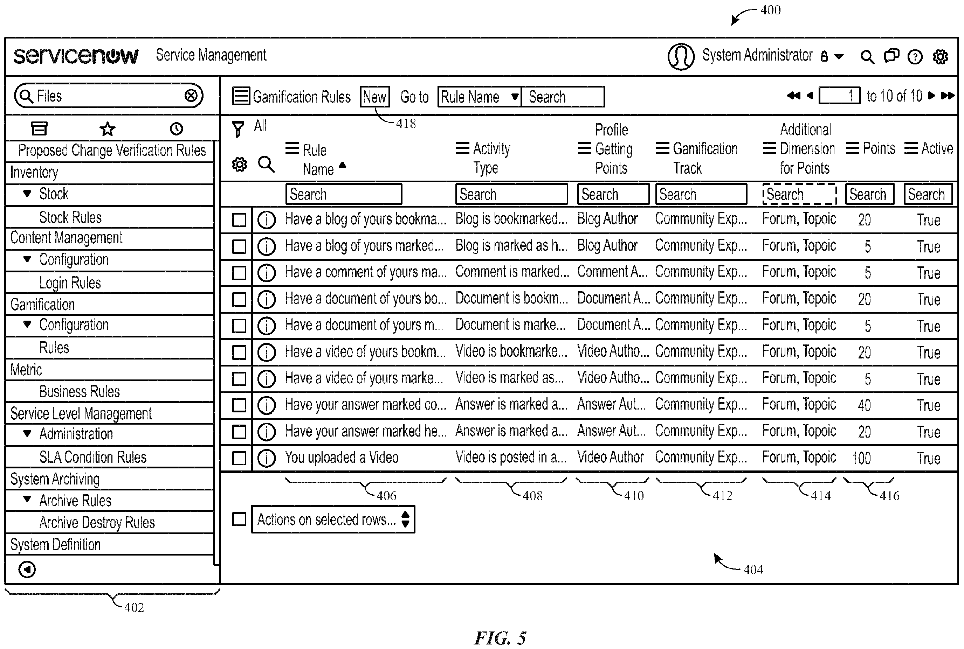

As previously discussed, a user may acquire points applied to various skills in order to earn badges and bolster their reputation in various areas. A set of rules may govern when and how points are awarded upon performance of specific tasks or activities. FIG. 5 is an embodiment of a screen visible to an administrator that includes a table of rules for point allocation. As shown, the left side of the screen includes a nested rules menu 402 that organizes rules by topic. A user may navigate the nested rules menu 402 by clicking on items. The arrows next to each item indicate sub-items within the item. Thus, by clicking on the item, the item expends to display the sub-items beneath it. As an item is selected, a list of corresponding rules are displayed in a window 404.

In the instant embodiment, gamification rules of the Community component are shown, but rules for awarding points also exist for Knowledge Management and CSM. In some embodiments, the system may come with a set of stock rules so an administrator does not have to build a rule architecture from the ground up. The administrator may edit the stock rules or add new rules via the window. Each rule listing includes a rule name 406, an activity type 408, an identification of the profile getting points 410, a gamification track 412, an additional dimensions listing 414, and a number of points awarded 416. The rule name 406 is defined by the user. The activity type is the activity that triggers points being awarded. The activity may be an activity that occurs in Community, Knowledge Management, and/or CSM. For example, activities that may result in points being awarded may include resolving a service ticket, a Knowledge Management page being marked correct, a blog being bookmarked or marked as helpful, correctly answering a question, content is posted to a forum, etc. The profile getting points 410 is the profile to which points are awarded when the activity occurs. In some cases, multiple profiles may be awarded points when the activity occurs.

As previously discussed, the points awarded to a profile may be allocated to certain skillsets (e.g., gamification track 412). As a user performs activities associated with specific skills, the user is awarded points toward those skills. For example, when a customer service agent helps a customer with encryption, the customer service agent may receive points allocated to security skills. In some embodiments, an activity may be associated with multiple skills. In such an embodiment, the additional skills are listed in the additional dimensions 414. The points listing 416 lists the number of points to be awarded. Though not shown, in some embodiments, the rule may also have a multiplier that is associated with an aspect of the activity (e.g., elapsed time, rating, review, etc.) The multiplier increases or decreases the number of points awarded based on the aspect of the activity. For example, for a customer service agent, resolving an issue and closing out a service ticket quickly may increase the number of points awarded for completing the activity. Alternatively, or in addition, if the user finds the agent helpful and gives the agent a good review, or marks their response as especially helpful, the agent may receive more points.

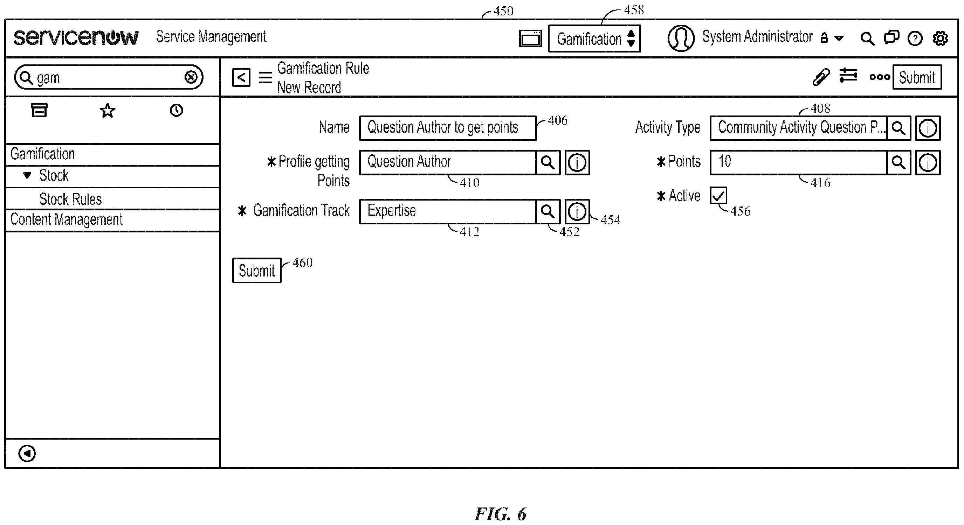

The administrator may add a new rule by clicking on the new rule button 418. The new rule button 418 causes a new window to open, by which the administrator may fill in the various fields to define a new rule. FIG. 6 is an embodiment of the new rule window 450. The administrator may fill in the fields (e.g., name 406, activity type 408, profile getting points 410, gamification track 412, additional dimensions track 414, number of points 416) to define the new rule. Some of the fields may include a search button 452 and an information button 454. For example, the administrator may type text into a field and then select the search button 452 to see relevant options for the field. In other embodiments, the search may be automatic, such as an auto-complete feature as the administrator enters text. In other embodiments, some data field may have a drop-down menu. The information button 454, when selected, displays a window that gives the administrator information about the data field. The administrator may make the rule active or inactive by selecting or deselecting the active checkbox 456. When a rule is inactive, points are not awarded upon the completion of the specified activity. To change what type of rule is being defined, the administrator may select the rule type button 458 and select the desired rule type from a drop down menu. Once the rule has been defined, the administrator selects the submit button 458 and the new rule window 450 closes, returning to the window 400 of FIG. 5.

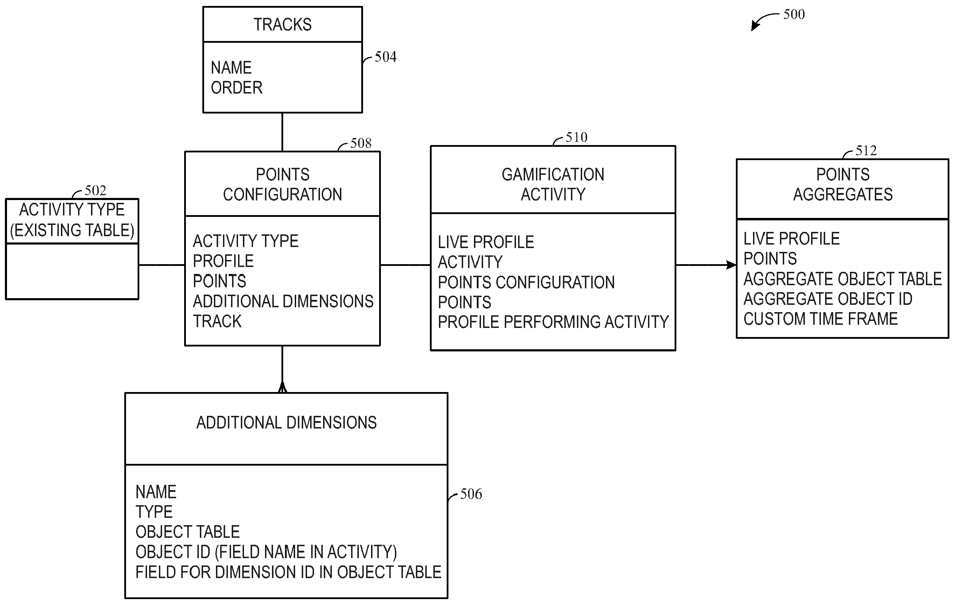

FIG. 7 is a table architecture 500 for keeping track of awarded points. As shown, an activity type table 502, a tracks table 504, and an additional dimensions table 506 feed data to a point configuration table 508. In some embodiments, the tracks table 504 and the additional dimensions table 506 may be combined into a single table. The points configuration table 508 then feeds data to the gamification activity table 510. The gamification activity table 510 feeds data to the points aggregates table, which tracks point totals for each profile, by track and/or dimension. As such, the points aggregates table 512 may be queried to determine the number of points a user has and how those points are distributed across skills (i.e., tracks and/or dimensions).

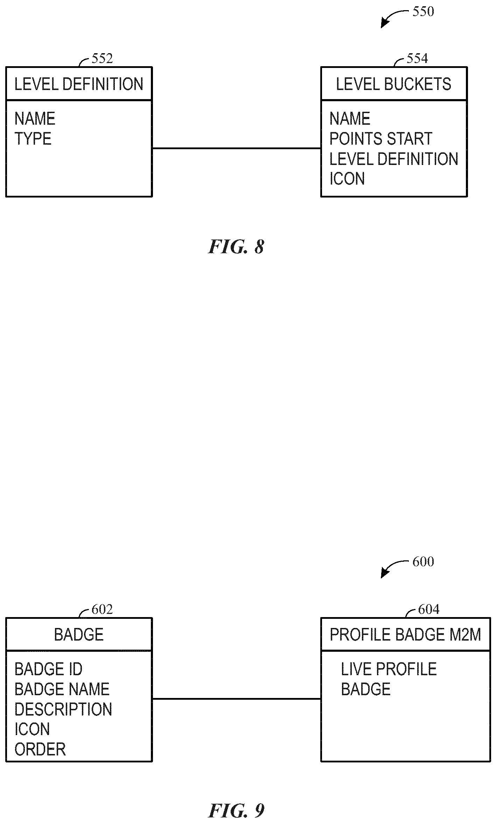

FIG. 8 is a table architecture 550 for keeping track of a user's level. A level definition table 552 contains the names of various levels and the corresponding level types. A level buckets table 554 contains the names, point ranges, level definitions, and icons for each level. Similarly, FIG. 9 is a table architecture 600 for keeping track of a user's badges. A badge table 602 contains the badge IDs, badge names, descriptions, icons, and orders of the various badges. A profile badge M2M table 604 contains the live profile of the user and the badges associated with the profile.

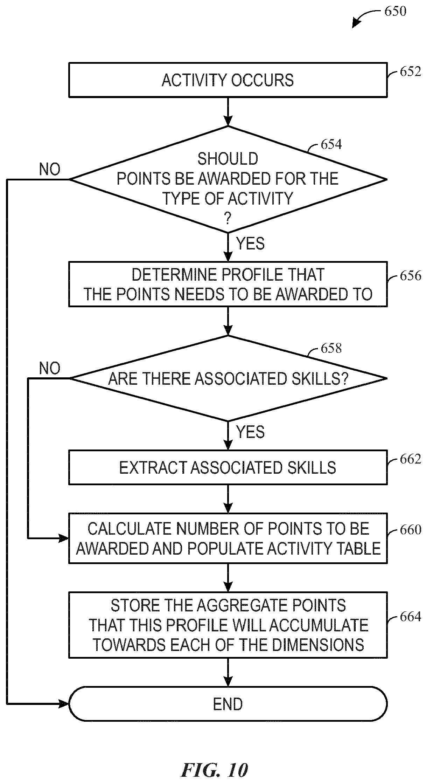

FIG. 10 is a flow chart of a process 650 for allocating points to profiles based on activities. At block 625, an activity occurs. The activity may include, for example, resolving an issue, closing a service ticket, posting content, interacting with content, other users interacting with posted content, etc. At block 645, the process 650 references the active rules to determine whether points should be awarded for the activity. If no points are to be awarded for the activity, the process ends. If points are to be awarded for the activity, the process proceeds to block 656, in which the profile to which points are awarded is identified. In some embodiments, the activity may result in a single profile getting points. In other embodiments, a single activity may result in multiple profiles being awarded points.

In block 658, the process 650 determines whether there are one or more skills associated with the activity. For example, answering a question about network architecture and having that answer marked correct may result in points being awarded toward a user's network architecture skills. Similarly, if a customer service agent helps a user resolve an issue related to network security, the customer service agent may receive points toward his or her network security skills. Of course, it should be understood that the range of skills is not limited to the examples provided. Instead, each user may acquire points toward a vast range of skills. In some embodiments, the skills toward which a user may acquire points may be set by an administrator. As a user acquires points toward certain skills, it may help other users to understand where the user's expertise lies. As such, a user that asks a question on the community component can ascertain which of multiple responding users has the most expertise in the area and should be trusted. Along these lines, forums, message boards, and other platforms may be identified as corresponding with a given subject matter or skillset. Users with expertise in that area may have their activities prioritized, highlighted, or otherwise emphasized based on their expertise in the area (as evidenced by a large number of accumulated points for that skillset). If there are no skills associated with the activity, the process 650 proceeds to block 660 and populates the activity table, allocating points to a generic "bucket" of points that is not related to specific skills. If there are skills associated with the activity, the process proceeds to block 662 and extracts the associated skills for the activity. If an activity is associated with multiple skills, the skills may be given a weight, such that one skill may receive more weight than the other skill or skills. For example, in some embodiments, an activity may be associated with multiple equally weighted skills. In other embodiments, an activity may be heavily associated with one or more primary skills and only tangentially related to one or more other tangential skills. In such an embodiments, points awarded for the activity will be more heavily weighted toward the primary skills and less heavily weighted toward the tangential skills.

In block 660, the number of points to be allocated, and their distribution among skills, is calculated and the activity table is populated. In some embodiments, some activities may have a time-based multiplier. That is, the number of points awarded may depend on how quickly the activity occurs. If a service ticket is resolved quickly, a question is correctly answered quickly, etc. more points may be awarded. In some embodiments, the multiplier scheme may be based on a value by which the number of points is multiplied, wherein the value decreases as time progresses. In other embodiments, there may be a threshold time, or multiple levels of threshold times. If the activity is completed in less than the threshold time, a larger number of points are awarded. Once the number of points to be allocated and their distribution across skills buckets is determined, the activity table is populated or updated to reflect those values. In block 664, the aggregate points for the given profile, in each of the skillset buckets, are stored. The process then ends until a new activity occurs.

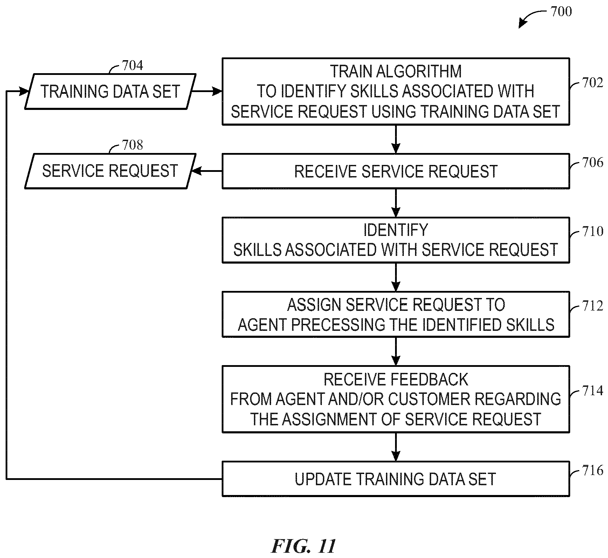

As previously discussed, points acquired toward skillsets, and the badges and/or levels earned with those points, may communicate a user's expertise in a given area to other users. In other embodiments, the skillset point totals may be used to identify the person best suited to handle a task, resolve an issue, or answer a question. FIG. 11 is a flow chart of a process 700 for training a machine learning algorithm to assign service requests and using the machine learning algorithm to process service requests. In block 702, the machine learning algorithm is trained to identify the skills associated with a service request using a training data set 704. For example, the training data set 704 may include a set of service requests and the associated skills needed by the customer service agent to resolve the issue and close the service request. In one embodiment, the machine learning algorithm may learn to recognize text or character strings and associate those character strings with certain skills. For example, the machine learning algorithm may be trained to recognize the term "password" in a service request and associate the service request with security.

Once the machine learning algorithm has been trained, the process proceeds to block 706 and receives a service request 708. In block 710 the machine learning algorithm analyzes the service request 708 to determine the one or more skills associated with the service request. As previously discussed, in some embodiments, identifying the skills associated with the service request may be based on text or character string recognition. In other embodiments, the machine learning algorithm may consider other aspects of the service request (e.g., the person or organization submitting the request) to determine that skills resolving the service request may utilize. In some embodiments, the requester may provide supplemental information that helps the machine learning algorithm home in on the skills associated with the service request. For example, when submitting response, the user may select a relevant subject area from a drop-down menu. However, in some instances, as a result of a mistake, the information provided by the requester may be incorrect. As such, the machine learning algorithm may take the information provided by the user into consideration without blindly limiting the possible skills to those corresponding with the information provided.

In block 712, the machine learning algorithm assigns the service request to an agent possessing the identified skills. For example, the machine learning algorithm may compare the identified skills to the profile point totals of the available agents. That is, if the service request is related to network security, then the machine learning algorithm identifies which agent or agents have the most expertise in security and assign the service request to one or those agents. In some embodiments, the algorithm may also take into account the bandwidth of the agents. For example, if agent 1 has a security score of 90 and agent 2 has a security score of 89, but agent 2 will be able to process the service request almost immediately, and agent 1 has a long queue of requests to process, the algorithm may assign the service request to agent 2, even though he has a lower score.

At block 714, feedback is received regarding the assignment of the service request. For example, in some embodiments, the agent to whom the service request was assigned may briefly review the service request and provide feedback as to whether the service request was properly assigned. In some embodiments, the customer or user who submitted the service request may provide feedback as to whether the agent was competent in addressing the service request. At block 716, the training data 704 set may be updated to reflect the feedback regarding the assignment of the service request. The updated training data set 704 may then be used to retrain the machine learning algorithm (block 702). Accordingly, as more and more service requests are assigned and feedback is given, the training data set gets larger and larger and more and more accurate. The machine learning algorithm is periodically retrained using the updated training data set, resulting in an algorithm that gets better and better at identifying the skills associated with service requests and assigning the service requests to service agents possessing those skills.

The disclosed techniques generally relate to building user profiles to identify skills or areas of expertise possessed by the users, identifying skills associated with tasks, and assigning tasks to the users possessing the associated skills. Specifically, each user may have an associated profile. As activities of the various users occur (e.g., posting content, interacting with content, answering questions, responding to service requests, resolving issued, etc.) the activities are associated with skills. Users are then awarded points to buckets that correspond to the respective skills. In some embodiments, badges or levels may be earned by accruing points. A user's level(s), badges, or points totals in each skill bucket may be indicative of, and thus communicate to other users, the skills possessed by the user and/or their areas of expertise. For customer service, service requests may be processed and analyzed using a machine learning algorithm configured to determine skills associated with a submitted service request and assign the service request to a service agent possessing the associated skill. Feedback regarding whether or not the service request was properly assigned may be used to update a training data set. As the training data set is updated, the algorithm is retrained, improving the ability of the machine learning algorithm to process service requests and assignment to agents.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

### CLAUSES SETTIG OUT FURTHER ASPECTS AND EMBODIMENTS

A1. A system, comprising: a non-transitory memory; and one or more hardware processors configured to read instructions from the non-transitory memory to perform operations comprising: maintaining a list of agent profiles, wherein each of the agent profiles comprises a plurality of skills toward which points are awarded based on completed activities; receiving a service request; identifying one or more skills associated with the service request; referencing the list of agent profiles to identify one of the agent profiles possessing the one or more skills associated with the service request; and assigning the service request to the agent profile possessing the one or more skills associated with the service request.
A2. The system of clause A1, wherein identifying the one or more skills associated with the service request comprises identifying words or character strings in the service request.
A3. The system of clause A2, wherein identifying the one or more skills associated with the service request comprises considering supplemental information provided with the service request.
A4. The system of clause A1, wherein the operations comprise training a machine learning algorithm to identify the one or more skills associated with a service request using a training data set.
A5. The system of clause A1, wherein the operations comprise receiving feedback regarding whether the service request was properly assigned to the agent profile.
A6. The system of clause A5, wherein the feedback regarding whether the service request was properly assigned to the agent is provided by an agent associated with the agent profile.
A7. The system of clause A1, wherein maintaining a list of agent profiles comprises: receiving activity data corresponding to an activity that has occurred; identifying an agent profile to receive points for the activity; calculating the number of points to be awarded toward each of one or more skills; updating a profile of the agent to reflect points awarded toward the one or more skills.
A8. A system, comprising: a non-transitory memory; and one or more hardware processors configured to read instructions from the non-transitory memory to perform operations comprising: receiving activity data corresponding to an activity that has occurred; identifying one or more profiles that will receive points for the activity; identifying whether there are one or more skills associated with the activity; calculating a number of points to be awarded for each of the one or more skills; updating the one or more profiles to reflect points awarded to the one or more skills; and assigning a service request to a first profile of the one or more profiles based at least in part on the first profile having points corresponding to the one or more skills associated with the service request.
A9. The system of clause A8, wherein the activity comprises resolving an issue resulting in the closure of the service request.
A10. The system of clause A8, wherein the activity comprises answering a question.
A11. The system of clause A8, wherein the activity comprises posting an essay explaining how to resolve an issue.
A12. The system of clause A8, wherein the one or more profiles that will receive points for the activity comprise and actor and a recipient.
A13. The system of clause A1, wherein calculating the number of points to be awarded toward each of one or more skills comprises multiplying a preliminary total of points by a multiplier, wherein the multiplier is based at least in part on the time for the activity to be completed.
A14. A system, comprising: a non-transitory memory; and one or more hardware processors configured to read instructions from the non-transitory memory to perform operations comprising: training a machine learning algorithm to identify one or more skills associated with a service request using a training data set; receiving the service request; identifying the one or more skills associated with the service request; assigning the service request to an agent possessing the one or more skills; receiving feedback regarding whether the service request was properly assigned to the agent; updating the training data set; and retraining the machine learning algorithm using the updated training data set.
A15. The system of clause A14, wherein the feedback regarding whether the service request was properly assigned to the agent is provided by the agent.
A16. The system of clause A14, wherein the feedback regarding whether the service request was properly assigned to the agent is provided by a user.
A17. The system of clause A14, wherein identifying the one or more skills associated with the service request comprises recognizing words or character strings in the service request.
A18. The system of clause A14, wherein identifying the one or more skills associated with the service request comprises considering supplemental information provided by a user.
A19. The system of clause A14, wherein calculating the number of points to be awarded toward each of one or more skills comprises applying one or more rules defined by an administrator.
A20. The system of clause A14, wherein badges are earned and displayed on the profile based on the number of points the agent's profile possesses for the one or more skills.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [performing [a function]..." or "step for [perform]ing [a function] ...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A system, comprising:
a non-transitory memory; and
one or more hardware processors configured to read instructions from the non-transitory memory to perform operations comprising:
maintaining a list of agent profiles, wherein each of the agent profiles comprises a plurality of skills toward which points are awarded based on completed activities;
receiving a service request;
identifying one or more skills associated with the service request;
referencing the list of agent profiles to identify one of the agent profiles possessing the one or more skills associated with the service request; and
assigning the service request to the agent profile possessing the one or more skills associated with the service request.

2. The system of claim 1, wherein identifying the one or more skills associated with the service request comprises identifying words or character strings in the service request.

3. The system of claim 1, wherein the operations comprise training a machine learning algorithm to identify the one or more skills associated with a service request using a training data set.

4. The system of claim 1, wherein the operations comprise receiving feedback regarding whether the service request was properly assigned to the agent profile.

5. The system of claim 1, wherein maintaining a list of agent profiles comprises:
receiving activity data corresponding to an activity that has occurred;
identifying an agent profile to receive points for the activity;
calculating the number of points to be awarded toward each of one or more skills;
updating a profile of the agent to reflect points awarded toward the one or more skills.

6. A method, comprising:
receiving activity data corresponding to an activity that has occurred;
identifying one or more profiles that will receive points for the activity;
identifying whether there are one or more skills associated with the activity;
calculating a number of points to be awarded for each of the one or more skills;
updating the one or more profiles to reflect points awarded to the one or more skills; and
assigning a service request to a first profile of the one or more profiles based at least in part on the first profile having points corresponding to the one or more skills associated with the service request.

7. The method of claim 6, wherein the activity comprises resolving an issue resulting in the closure of the service request.

8. The method of claim 6, wherein the activity comprises answering a question.

9. The method of claim 6, wherein the activity comprises posting an essay explaining how to resolve an issue.

10. The method of claim 6, wherein the one or more profiles that will receive points for the activity comprise and actor and a recipient.

11. The method of claim 6, wherein calculating the number of points to be awarded toward each of one or more skills comprises multiplying a preliminary total of points by a multiplier, wherein the multiplier is based at least in part on the time for the activity to be completed.

12. A tangible, non-transitory medium containing instructions that when executed by a processor cause the processor to perform operations comprising:
training a machine learning algorithm to identify one or more skills associated with a service request using a training data set;
receiving the service request;
identifying the one or more skills associated with the service request;
assigning the service request to an agent possessing the one or more skills;
receiving feedback regarding whether the service request was properly assigned to the agent;
updating the training data set; and
retraining the machine learning algorithm using the updated training data set.

13. The medium of claim 12, wherein the feedback regarding whether the service request was properly assigned to the agent is provided by the agent.

14. The medium of claim 12, wherein identifying the one or more skills associated with the service request comprises recognizing words or character strings in the service request.

15. The medium of claim 12, wherein badges are earned and displayed on the profile based on the number of points the agent's profile possesses for the one or more skills.
